# FASCICULE DE BREVET EUROPEEN

(11) **EP 4 475 555 B1**
(45) Date de publication et mention de la délivrance du brevet: **05.11.2025**
(21) Numéro de dépôt: 24178029.5
(22) Date de dépôt: 24.05.2024
(51) Int. Cl.: H04N 25/00, H04N 25/78, H04N 25/79

(54) **IMAGEUR INTELLIGENT POUR ANALYSE INTENSIVE D'IMAGES EN TEMPS RÉEL**
INTELLIGENTER BILDGEBER FÜR DIE INTENSIVE BILDANALYSE IN ECHTZEIT
SMART IMAGER FOR INTENSIVE REAL-TIME IMAGE ANALYSIS

(30) Priorité: 05.06.2023 FR 2305638
(43) Date de publication de la demande: 11.12.2024
(73) Titulaire: Commissariat à l'Energie Atomique et aux Energies Alternatives, 75015 Paris (FR)
(72) Inventeur: PAJANIRADJA, Suresh, 91191 GIF-SUR-YVETTE (FR); TAIN, Benoit, 91191 GIF-SUR-YVETTE (FR)
(74) Mandataire: Brevalex

(56) Documents cités:
- CN-B- 102 665 049
- US-A1- 2019 297 295
- US-A1- 2020 321 374
- MILLET LAURENT ET AL: "A 5500-frames/s 85-GOPS/W 3-D Stacked BSI Vision Chip Based on Parallel In-Focal-Plane Acquisition and Processing", IEEE JOURNAL OF SOLID-STATE CIRCUITS, IEEE, USA, vol. 54, no. 4, 1 April 2019 (2019-04-01), pages 1096 - 1105, XP011716786, ISSN: 0018-9200, [retrieved on 20190326], DOI: 10.1109/JSSC.2018.2886325

## Description

### Domaine de l'invention

La présente invention appartient au domaine des imageurs intelligents. Un imageur intelligent est un système intégrant un capteur de vision et un processeur de traitement d'images. L'invention est particulièrement bien adaptée au cas d'un imageur intelligent comportant un capteur de vision de grande résolution et un processeur parallèle adapté pour mettre en œuvre un traitement intensif d'analyse d'images basé sur un algorithme d'intelligence artificielle.

### Etat de la technique

Dans un imageur intelligent comportant un capteur de vision de grande résolution et un processeur de traitement intensif d'analyse d'images, l'interface entre le capteur et le processeur de traitement est particulièrement difficile à implémenter. En raison d'une part de la grande quantité de données provenant du capteur et d'autre part de la complexité du processeur de traitement, l'interface entre le capteur et le processeur de traitement introduit souvent une latence dans le traitement opéré par le processeur.

Le capteur de vision prend généralement la forme d'une matrice de pixels. Chaque pixel comporte un photodétecteur configuré pour fournir un signal analogique représentatif d'une intensité lumineuse reçue par le photodétecteur. Chaque pixel est connecté à un convertisseur analogique-numérique (ADC pour l'acronyme anglais « Analog to Digital Converter ») via un circuit de lecture (« readout circuit » en anglais) pour transformer le signal analogique en une donnée numérique. Pour permettre l'analyse d'images en temps réel, les données numériques représentatives des pixels du capteur doivent être acheminées vers le processeur de traitement avec un minimum de latence.

Pour effectuer un traitement intensif d'analyse d'images, il est avantageux d'utiliser un processeur de traitement à architecture parallèle. Un tel processeur est organisé en plusieurs unités de calcul parallèles. Chaque unité de calcul comporte plusieurs processeurs élémentaires ainsi qu'une mémoire partagée entre ces processeurs élémentaires. Un tel processeur est particulièrement bien adapté à la mise en œuvre d'un algorithme d'intelligence artificielle d'analyse d'images.

Les imageurs intelligents conventionnels comportent une mémoire tampon (« frame buffer » en anglais) et un séquenceur positionnés entre le capteur et le processeur de traitement. Pour effectuer le traitement d'image, les données numériques représentatives des pixels du capteur sont d'abord mémorisées dans la mémoire tampon, puis acheminées séquentiellement vers les mémoires partagées des différentes unités de calcul à l'aide du séquenceur.

La demande de brevet WO 2014/057106 A1 décrit un capteur d'images comprenant plusieurs groupes de pixels ainsi que des convertisseurs analogique-numérique en pied de colonne (chaque convertisseur est configuré pour réaliser la conversion analogique-numérique des signaux de pixels d'une colonne d'un groupe de pixels). Les données numérisées sont stockées dans une mémoire tampon formée par plusieurs bancs de mémoires. Un séquenceur est configuré pour lire les bancs de mémoire et exporter les données numériques de pixels vers une interface de sortie à destination d'un processeur de traitement d'image.

La demande de brevet WO 2017/161060 A1 décrit un imageur prenant la forme d'un circuit intégré tridimensionnel. Une matrice de pixels est implémentée sur une première couche de l'imageur. Une deuxième couche de l'imageur comporte un circuit de lecture et des convertisseurs analogique-numérique selon une structure par groupes : la matrice de pixels est divisée en plusieurs groupes de pixels et chaque groupe de pixel est associé à un convertisseur analogique-numérique (on parle de structure de type « cluster ADC » en anglais). Les données numériques de pixels sont mémorisées dans une mémoire tampon avant d'être exportées vers un processeur d'analyse d'images.

Le document « 3D Integration Technologies for the Stacked CMOS Image Sensors », Y. Kagawa et al., 2019 International 3D Systems Integration Conference (3DIC), décrit également un imageur prenant la forme d'un circuit intégré tridimensionnel. Une matrice de pixels est implémentée sur une première couche de l'imageur, et des convertisseurs analogique-numérique positionnés au pied des colonnes de la matrice de pixels alimentent une mémoire tampon implémentée sur une deuxième couche de l'imageur. Cette mémoire tampon permet de stocker temporairement les données numériques de pixels avant d'être exportées séquentiellement vers un processeur d'analyse d'images.

Les imageurs présentés ci-avant présentent tous l'inconvénient d'introduire de la latence dans le traitement d'analyse d'images.

La demande de brevet EP 3971979 A1 décrit une architecture de circuit intégré tridimensionnel permettant d'optimiser la répartition des composants analogiques et numériques dans un empilement d'au moins trois couches de semi-conducteur. Une telle architecture peut notamment être adaptée à la réalisation d'un circuit intégré pour un imageur (capteur d'images).

Le papier "A 5500-frames/s 85-GOPS/W 3-D Stacked BSI Vision Chip Based on Parallel In-Focal-Plane Acquisition and Processing", de MILLET LAURENT ET AL dans IEEE JOURNAL OF SOLID-STATE CIRCUITS, IEEE, USA, vol. 54, no. 4, 1 avril 2019, pages 1096-1105 divulgue un capteur d'image à architecture empilée à deux couches. Les pixels et les comparateurs des ADCs sont dans la couche supérieure, les compteurs des ADCs et les processeurs élémentaires sont dans la couche inférieure.

La demande de brevet US 2019/297295 A1 divulgue un capteur d'image à architecture multicouches empilées dans lequel la couche capteur est placée au-dessus d'une couche de calcul. Celle-ci comprend un réseau de processeurs élémentaires de traitement. Des ADC de colonne sont situées sur n'importe quelle couche, y compris la couche inférieure. Chaque processeur élémentaire comprend un ADC et une mémoire SRAM pour stocker le résultat numérique de l'ADC, ainsi que trois ALU.

La demande de brevet US 2020/321374 A1 divulgue un capteur d'image à architecture empilée avec un réseau de neurone. L'ADC inclut une mémoire.

### Exposé de l'invention

La présente invention a pour objectif de remédier à tout ou partie des inconvénients de l'art antérieur, notamment ceux exposés ci-avant.

A cet effet, et selon un premier aspect, il est proposé par la présente invention, un imageur intelligent comprenant un circuit intégré tridimensionnel comportant un empilement d'au moins deux couches de circuit intégré. Chaque couche est électriquement connectée à au moins une autre couche par l'intermédiaire de connexions électriques traversantes. Les couches comprennent une couche supérieure, dite « couche de capteur », et une ou plusieurs couches inférieures, dites « couches de traitement ». La couche de capteur comprend un capteur photosensible comportant une matrice de pixels, chaque pixel étant configuré pour fournir un signal analogique représentatif d'une intensité lumineuse reçue. Le circuit intégré tridimensionnel comporte un bloc de conversion implémenté sur la couche de capteur et/ou sur une ou plusieurs couches de traitement, un processeur de traitement parallèle implémenté sur une ou plusieurs couches de traitement, un bus de données et un bloc de contrôle implémentés sur la ou les couches de traitement sur lesquelles le processeur de traitement parallèle est implémenté. Le bloc de conversion comprend une pluralité de convertisseurs analogique-numérique chacun associé respectivement à une colonne de la matrice de pixels. Le bloc de conversion est configuré pour transformer en données numériques les signaux analogiques fournis par les pixels. Le processeur de traitement parallèle comporte une pluralité d'unités de calcul, chaque unité de calcul comportant plusieurs processeurs élémentaires et une mémoire partagée entre les processeurs élémentaires de l'unité de calcul. Le bus de données et le bloc de contrôle sont configurés pour acheminer les données numériques en sortie du bloc de conversion directement vers les mémoires partagées des unités de calcul, les données numériques représentatives d'une même ligne de pixels étant toutes acheminées simultanément vers différentes unités de calcul.

Un « circuit intégré » est également appelé « circuit microélectronique » ou « puce électronique ». Un circuit intégré comprend des composants électroniques actifs analogiques et/ou numériques réalisés à partir d'un matériau semi-conducteur, ainsi que des pistes métalliques permettant d'interconnecter électriquement les composants électroniques entre eux.

Dans la présente demande, une « couche de circuit intégré » correspond à un circuit microélectronique plan (2D) qui forme une partie du circuit intégré tridimensionnel (3D) formant l'imageur. Les différentes couches (couramment dénommées sous le terme « tiers » en anglais) sont empilées verticalement les unes au-dessus des autres (la verticale étant définie par la direction de l'empilement des couches). Le terme « couche » a ici la même signification que le terme « niveau » (le circuit intégré 3D est formé par un empilement de plusieurs « niveaux » de circuit).

Une couche de l'empilement peut être électriquement connectée à une autre couche par l'intermédiaire de vias. Un via est une connexion métallique permettant de traverser verticalement le substrat semi-conducteur d'une couche pour connecter électriquement deux composants électroniques réalisés dans deux couches différentes de l'empilement).

Différentes méthodes de fabrication peuvent être envisagées pour réaliser les différentes couches de l'empilement. Selon un premier exemple, connu sous le nom d'« intégration 3D parallèle » (« 3D stacking » ou « 3D packaging » en anglais), les différentes couches sont réalisées indépendamment les unes des autres à partir de différents wafers, puis les couches sont superposées et interconnectées par des connexions de type TSV (acronyme anglais de « Through-Silicon Via »). Selon un autre exemple, connu sous le nom d'« intégration 3D séquentielle » ou « intégration 3D monolithique »), les différentes couches sont directement réalisées les unes sur les autres. Par exemple, après avoir réalisé une première couche de circuit intégré à partir d'un premier substrat semi-conducteur, un deuxième substrat semi-conducteur est reporté sur la première couche (par exemple par un collage oxyde-oxyde) ; le deuxième substrat est ensuite aminci ; les composants électroniques de la deuxième couche sont ensuite fabriqués à partir du deuxième substrat. Dans le cas d'une intégration 3D séquentielle, les connexions électriques entre les couches sont de type MIV (acronyme anglais pour « Monolithic Inter-tier Via »). Les connexions électriques entre les différentes couches peuvent également être réalisées par l'intermédiaire de plots de contact ou de microbilles. Il est également envisageable de réaliser l'empilement des couches de circuit intégré de l'imageur en utilisant une intégration 3D parallèle pour une partie des couches et une intégration 3D séquentielle pour une autre partie des couches.

La couche de capteur est la première couche de l'empilement (couche supérieure située en haut de l'empilement). La couche de capteur peut fonctionner dans le visible ou dans l'infra-rouge, selon l'application visée. Les couches de traitement sont situées en-dessous de la couche de capteur.

Chaque pixel du capteur photosensible correspond à un photodétecteur formé par exemple par une photodiode (jonction PN), un phototransistor, une photodiode associée à des portes de transfert, ou un photodétecteur réalisé dans une couche photosensible organique ou colloïdale.

La couche de capteur peut par exemple être réalisée selon une configuration d'illumination face arrière (capteur BSI, pour « Back-Side Illumination » en anglais) ou selon une configuration face avant (capteur FSI, pour « Front-Side Illumination » en anglais).

Dans la présente demande, le terme « bloc » désigne une partie du circuit intégré tridimensionnel formant l'imageur et répondant à une certaine fonction logique. Un bloc peut comporter différents composants électroniques analogiques et/ou numériques. Un bloc peut être implémenté sur une seule couche ou sur plusieurs couches du circuit intégré tridimensionnel.

Le bloc de conversion a pour fonction de transformer en données numériques les signaux analogiques fournis par les pixels. Le bloc de conversion peut être implémenté sur une seule couche, par exemple sur la couche de traitement située directement sous la couche de capteur, ou sur une couche de traitement inférieure, voire même sur la couche de capteur. Rien n'empêche toutefois que le bloc de conversion soit implémenté sur plusieurs couches ; par exemple différentes parties du bloc de conversion peuvent être implémentées sur plusieurs couches de traitement, ou bien une partie du bloc de conversion peut être implémenté sur la couche de capteur et d'autres parties du bloc de conversion peuvent être implémentées sur une ou plusieurs couches de traitement.

De façon avantageuse, le bloc de contrôle peut être configuré pour acheminer une même donnée numérique vers au moins deux unités de calcul distinctes en transmettant ladite donnée numérique une seule fois sur le bus de données.

De telles dispositions permettent de réaliser une fonction de redondance (par exemple lorsque les mêmes données numériques de pixels sont transmises à au moins deux unités de calcul distinctes) ou une fonction de traitement par imagette avec des zones de recouvrement (par exemple lorsqu'une partie seulement des données numériques de pixels destinées à une unité de calcul est également transmise à une autre unité de calcul). Le fait de pouvoir transmettre une même donnée numérique à plusieurs unités de calcul distinctes en une seule transmission sur le bus de données évite d'introduire de la latence dans le traitement.

Dans des modes particuliers de réalisation, le bloc de conversion est entièrement implémenté sur une ou plusieurs couches de traitement.

Dans des modes particuliers de réalisation, le bloc de conversion est entièrement implémenté sur une seule couche de traitement.

Dans des modes particuliers de réalisation, le bloc de conversion est entièrement implémenté sur la couche de traitement située immédiatement sous la couche de capteur.

Le bloc de conversion comporte notamment des convertisseurs analogique-numérique (ADCs). Le bloc de conversion peut également comporter d'autres composants électroniques, comme par exemple un circuit analogique d'amplification et de mise en forme des signaux, un décodeur de ligne ou de colonne de pixels, un circuit de lecture des pixels (« readout circuit »), etc. Les convertisseurs analogique-numérique (ADCs) du bloc de conversion sont agencés en pied des colonnes de la matrice de pixels du capteur photosensible (agencement de type « column ADC »). Cet agencement permet de mutualiser efficacement les ADCs sur les colonnes de pixels. La surface occupée par les ADCs est par conséquent optimisée (la surface occupée est nettement plus faible que pour un agencement de type « cluster ADC »). Le circuit de lecture (« readout circuit ») est également nettement moins complexe. L'agencement des ADCs en pied de colonne permet d'obtenir une densité de photodétecteurs plus importante dans la matrice de pixels, ce qui permet d'améliorer les performances du capteur (par exemple en termes de signal sur bruit ou d'efficacité quantique).

Le processeur de traitement parallèle peut notamment être configuré pour exécuter un traitement intensif d'analyse d'images, par exemple pour de la reconnaissance de formes, d'objets, de visages, ou pour de la détection d'événements (par exemple détection de mouvement ou reconnaissance de geste) dans des images. Ce traitement intensif d'analyse d'images peut être basé sur un ou plusieurs algorithmes d'intelligence artificielle.

Différentes options d'implémentation sont envisageables pour le processeur de traitement parallèle : il peut être implémenté entièrement sur la couche de traitement située immédiatement sous la couche de capteur (deuxième couche de l'empilement), il peut être implémenté en partie sur la deuxième couche et en partie sur au moins une autre couche de traitement inférieure à la deuxième couche, ou bien il peut être implémenté sur une ou plusieurs couches de traitement inférieure à la deuxième couche.

Dans des modes particuliers de réalisation, le circuit intégré tridimensionnel comporte au moins trois couches, et le processeur de traitement parallèle est implémenté en partie sur la couche de traitement qui implémente le bloc de conversion et en partie sur au moins une autre couche de traitement.

L'utilisation d'un circuit intégré 3D pour réaliser l'imageur intelligent confère plusieurs avantages. La structure en empilement de couches permet de réduire la longueur des connexions électriques entre les différents composants électroniques réalisés sur les différentes couches, ce qui permet d'optimiser les performances. La structure en 3D permet également de répartir les différents blocs fonctionnels sur différentes couches en fonction de leurs spécificités. Chaque bloc peut alors être réalisé selon la technologie la plus adaptée (chaque couche pouvant être réalisée avec une technologie différente). La structure en 3D permet aussi de mettre en œuvre une architecture avec un haut niveau de parallélisation des tâches opérées par les différents circuits des différentes couches.

Chaque unité de calcul du processeur de traitement est configurée pour traiter des données numériques correspondant à une zone (un sous-ensemble) de pixels de la matrice de pixels du capteur photosensible.

Le bus de données et le bloc de contrôle offrent la fonctionnalité d'un réseau de communication permettant d'acheminer les données numériques en sortie du bloc de conversion vers les différentes unités de calcul. Il est important de noter que les données numériques sont acheminées « directement » du bloc de conversion vers les différentes unités de calcul. Cela signifie que, dans l'architecture d'imageur intelligent proposée, il n'y a pas de mémoire tampon intermédiaire pour mémoriser les données numériques de pixels entre un ADC et le processeur de traitement. Autrement dit, les données numériques sont acheminées directement du bloc de conversion vers les mémoires partagées des unités de calcul sans être mémorisées dans une autre mémoire intermédiaire.

Les processeurs élémentaires des unités de calcul du processeur de traitement sont destinés à être configurés pour lire des données numériques mémorisées dans la mémoire partagée de l'unité de calcul à laquelle ils appartiennent, et pour exécuter un algorithme d'analyse d'images directement à partir des données lues (par exemple un algorithme d'intelligence artificielle). Cette interface directe vers les unités de calcul, sans mémoire tampon intermédiaire, permet de traiter les données pixels au plus tôt après la conversion numérique, ce qui permet un gain substantiel en latence de traitement. Le fait de se passer d'une mémoire tampon intermédiaire permet en outre de limiter l'encombrement de l'imageur et la puissance consommée par l'imageur.

Le bloc de contrôle est configuré de telle sorte que des données numériques représentatives d'une même ligne de pixels sont toutes acheminées simultanément vers différentes unités de calcul. Ainsi, les unités de calcul ayant reçu des données numériques relatives à une ou plusieurs lignes de pixels de la matrice peuvent commencer leur traitement pendant que des données numériques relatives à une ou plusieurs autres lignes de pixels sont acheminées vers d'autres unités de calcul. Ceci permet également de réduire la latence dans le traitement d'analyse d'images.

Une donnée numérique en sortie du bloc de conversion peut être représentative d'un seul pixel ou d'un groupe (une zone) de pixels de la matrice du capteur photosensible.

Dans des modes particuliers de réalisation, le bloc de conversion comporte des blocs de regroupement de pixels, chaque bloc de regroupement de pixels étant connecté à plusieurs convertisseurs analogique-numérique associés à plusieurs colonnes successives de la matrice de pixels, chaque bloc de regroupement de pixels étant configuré pour fournir une donnée numérique représentative d'un groupe de pixels de la matrice de pixels.

Par exemple, une donnée numérique peut être représentative d'un groupe de M x N pixels, où M est un nombre diviseur (strictement inférieur) du nombre de colonnes de la matrice et N est un nombre diviseur (strictement inférieur) du nombre de lignes de la matrice. La donnée numérique peut notamment correspondre à une moyenne (éventuellement pondérée) des M x N pixels. De telles dispositions permettent de réduire la complexité du traitement d'analyse intensif en réduisant la quantité de données numériques à traiter. Cela permet également une réduction en encombrement et en puissance consommée par l'imageur.

Dans des modes particuliers de réalisation, les unités de calcul sont agencées de façon matricielle selon plusieurs lignes et plusieurs colonnes, et le bloc de contrôle comporte plusieurs sous-blocs de contrôle, chaque sous-bloc de contrôle étant connecté à toutes les unités de calcul d'une même colonne par l'intermédiaire d'une branche du bus de données.

Il est ainsi possible de pouvoir transmettre une même donnée numérique à plusieurs unités de calcul d'une même colonne en une seule fois.

Dans des modes particuliers de réalisation, le circuit intégré tridimensionnel comporte en outre un processeur d'optimisation distinct du processeur de traitement parallèle, implémenté sur une ou plusieurs couches de traitement. Des données numériques en sortie du bloc de conversion sont acheminées au processeur d'optimisation par un chemin distinct du bus de données.

Le processeur d'optimisation est par exemple adapté pour exécuter un algorithme d'optimisation ou de correction d'erreurs, et pour faire sortir un flux d'images sur une interface de sortie, comme par exemple une interface de type MIPI (acronyme anglais pour « Mobile Industry Processor Interface », il s'agit d'une alliance dédiée au développement de spécifications d'interface pour les produits mobiles).

L'utilisation de deux chemins distincts pour acheminer les données numériques vers le processeur de traitement parallèle et vers le processeur d'optimisation permet un traitement simultané d'amélioration d'image et d'analyse intensive d'image. Grâce à ce découplage, le traitement d'optimisation d'image et/ou de correction de défauts optiques mis en œuvre par le processeur d'optimisation n'ajoute pas de latence supplémentaire au traitement intensif d'analyse d'image mis en œuvre par le processeur de traitement parallèle (l'amélioration et la correction de défauts mis en œuvre par le processeur d'optimisation n'est pas nécessaire pour le traitement d'analyse d'image mis en œuvre par le processeur de traitement parallèle).

Différentes options sont envisageables pour acheminer les données numériques en sortie du bloc de conversion vers les unités de calcul du processeur de traitement parallèle.

Dans des modes particuliers de réalisation, l'acheminement des données est opéré « point à point », ou « point à multipoints » : le bloc de contrôle est alors configuré pour encapsuler une donnée numérique dans un message comportant au moins un identifiant d'adressage correspondant à au moins une unité de calcul, et pour diffuser ledit message sur le bus de données vers plusieurs unités de calcul ; chaque unité de calcul comporte un bloc de filtrage configuré pour détecter, en fonction dudit au moins un identifiant d'adressage, si la donnée numérique encapsulée dans le message doit ou non être traitée par l'unité de calcul.

Dans des modes particuliers de réalisation, l'acheminement des données est mis en œuvre par diffusion (« broadcast » en anglais) : chaque unité de calcul comporte alors un bloc de filtrage configuré pour détecter, en fonction d'un nombre de données numériques reçues, si une donnée numérique reçue doit ou non être traitée par l'unité de calcul.

### Présentation des figures

L'invention sera mieux comprise à la lecture de la description suivante, donnée à titre d'exemple nullement limitatif, et faite en se référant aux figures suivantes qui représentent :
[Fig. 1] une représentation schématique de l'architecture de l'imageur intelligent selon l'invention,
[Fig. 2] une représentation schématique d'un premier exemple de réalisation de l'imageur intelligent sous la forme d'un circuit intégré tridimensionnel comportant trois couches empilées,
[Fig. 3] une représentation schématique détaillée du premier exemple de réalisation décrit à la figure 2,
[Fig. 4] une représentation schématique de la couche de capteur de l'imageur intelligent, [Fig. 5] une représentation schématique d'une couche de traitement de l'imageur intelligent,
[Fig. 6] une représentation schématique d'une autre couche de traitement de l'imageur intelligent,
[Fig. 7] une représentation schématique d'un deuxième exemple de réalisation de l'imageur intelligent sous la forme d'un circuit intégré tridimensionnel comportant cinq couches empilées,
[Fig. 8] une représentation schématique détaillée du deuxième exemple de réalisation illustré à la figure 7,
[Fig. 9] une représentation schématique d'une couche de traitement de l'imageur intelligent selon le deuxième exemple de réalisation,
[Fig. 10] une représentation schématique d'une unité de calcul du processeur de traitement parallèle intégré dans l'imageur intelligent.

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée de l'invention

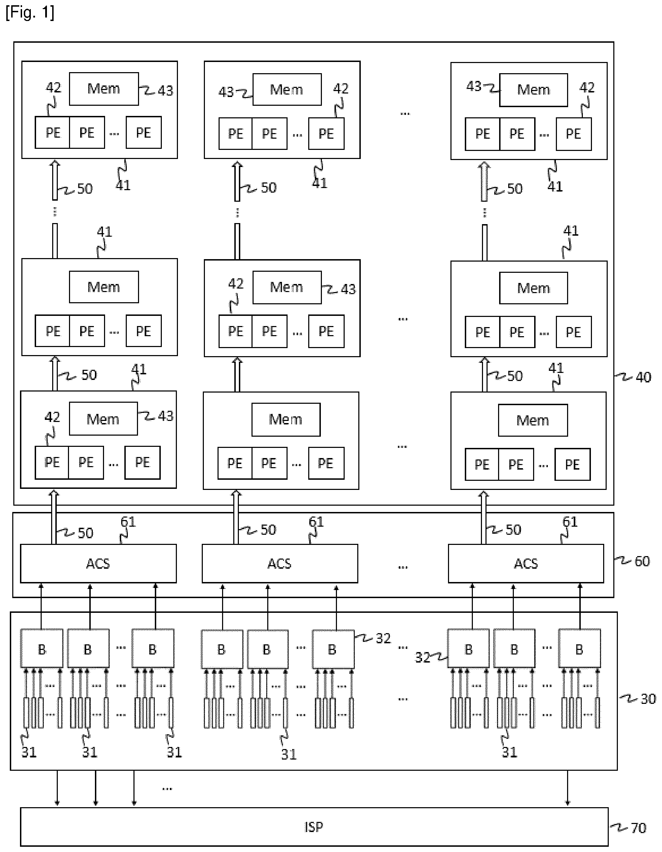

La figure 1 représente schématiquement une architecture de calcul de l'imageur intelligent selon l'invention. Il s'agit là d'une représentation fonctionnelle de différents composants électroniques implémentés sur un circuit intégré tridimensionnel (3D) formant l'imageur intelligent.

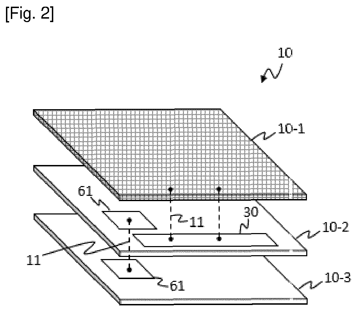

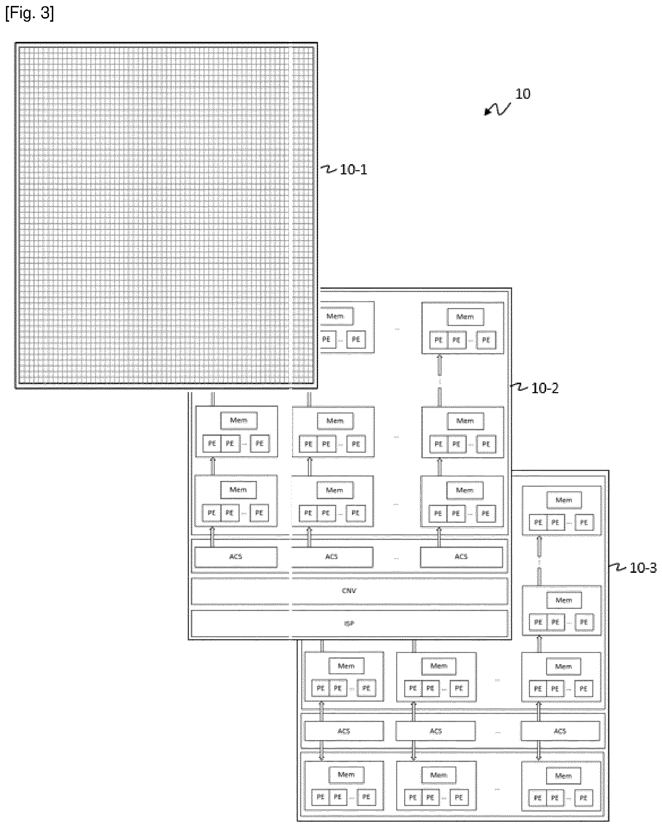

Les figures 2 et 3 représentent un premier exemple d'empilement de trois couches 10-1, 10-2, 10-3 de circuit intégré pour former le circuit intégré tridimensionnel 10 formant l'imageur intelligent.

On entend par « circuit intégré » un circuit microélectronique qui comprend des composants électroniques actifs analogiques et/ou numériques réalisés à partir d'un matériau semi-conducteur, ainsi que des pistes métalliques permettant d'interconnecter électriquement les composants électroniques entre eux. L'expression « matériau semi-conducteur » englobe tout matériau présentant des propriétés semi-conductrices (semi-conducteur amorphe ou polycristallin comme par exemple le silicium, nanotubes de carbone, oxyde semi-conducteur, etc.).

Tel qu'illustré sur la figure 2, les trois couches 10-1, 10-2, 10-3 sont empilées les unes au-dessus des autres. Chaque couche de l'empilement est électriquement connectée à au moins une autre couche par l'intermédiaire de connexions 11 électriques traversantes. Une telle connexion 11 permet de traverser verticalement le substrat semi-conducteur d'une couche pour connecter électriquement deux composants électroniques réalisés dans deux couches différentes de l'empilement).

Comme indiqué précédemment, différentes méthodes de fabrication peuvent être envisagées pour réaliser les différentes couches 10-1, 10-2, 10-3, comme par exemple une intégration 3D parallèle, une intégration 3D séquentielle, ou un mix de ces deux techniques. Dans le cas d'une intégration 3D parallèle, les connexions 11 électriques traversantes peuvent prendre la forme de connexions de type TSV (« Through-Silicon Vias ») ; dans le cas d'une intégration 3D séquentielle, les connexions 11 électriques traversantes peuvent prendre la forme de connexions de type MIV (« Monolithic Inter-tier Via »). Les connexions 11 électriques traversantes peuvent également être réalisées par l'intermédiaire de plots de contact ou de microbilles.

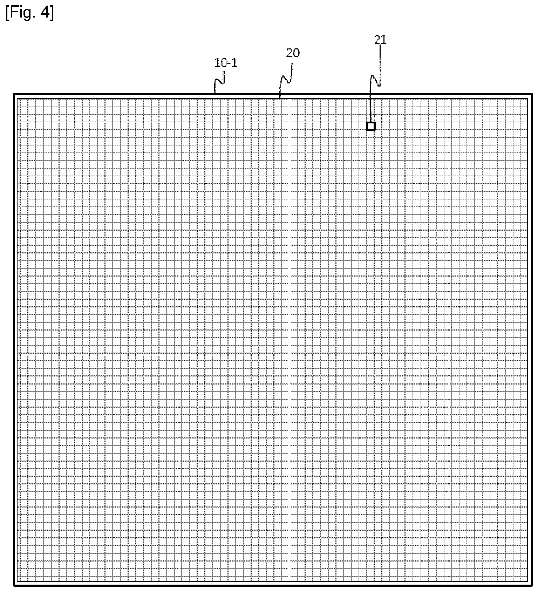

La première couche 10-1 de l'empilement (couche supérieure située sur le haut de l'empilement) est appelée « couche de capteur ». La couche 10-1 de capteur est représentée schématiquement de façon plus détaillée à la figure 4. La couche 10-1 de capteur comporte un capteur photosensible comportant une matrice 20 de pixels 21. Le capteur photosensible peut fonctionner dans le visible ou dans l'infra-rouge, selon l'application visée.

Chaque pixel 21 de la matrice 20 du capteur photosensible correspond à un photodétecteur. Un photodétecteur est par exemple formé par une photodiode (jonction PN), un phototransistor, une photodiode associée à des portes de transfert, ou un photodétecteur réalisé dans une couche photosensible organique ou colloïdale. De façon conventionnel, chaque pixel est configuré pour fournir un signal analogique représentatif d'une intensité lumineuse reçue.

Le capteur photosensible peut être réalisé selon une configuration d'illumination face arrière (capteur BSI). Dans une configuration BSI, les photodétecteurs sont positionnés au niveau de la face supérieure de la couche 10-1 de capteur (face qui est à l'opposé de la couche 10-2 située immédiatement en dessous de la couche 10-1 de capteur), et les pistes métalliques (routage) sont positionnées au niveau de la face inférieure de la couche 10-1 de capteur (face qui est en regard de la couche 10-2 située immédiatement en dessous de la couche de capteur). La configuration BSI permet d'optimiser la capture des photons par les photodétecteurs.

Selon un autre exemple, le capteur photosensible peut être réalisé selon une configuration face avant (capteur FSI). Dans une configuration FSI, les photodétecteurs sont positionnés au niveau de la face inférieure de la couche 10-1 de capteur, et les pistes métalliques (routage) sont positionnées au niveau de la face supérieure de la couche 10-1 de capteur. La configuration FSI permet de simplifier la fabrication de la couche de capteur. En contrepartie, la partie de routage réfléchit une partie de la lumière et réduit la quantité de photons détectés par les photodétecteurs.

Dans l'exemple considéré, la matrice 20 comporte 3072 lignes de 4096 pixels (la matrice 20 comporte donc 4096 colonnes de 3072 pixels, c'est une matrice de 4096 x 3072 pixels). Chaque pixel 21 occupe une surface de 1 µm² (un micromètre carré). La surface de silicium de la couche 10-1 de capteur est d'environ 12 mm². L'épaisseur de la couche 10-1 de capteur est inférieure à 300 µm.

Les différents blocs fonctionnels décrits à la figure 1 sont implémentés sur les couches 10-2 et 10-3 qui sont situées en-dessous de la couche 10-1 de capteur. Les couches 10-2 et 10-3 situées en dessous de la couche de capteur sont appelées « couches de traitement ».

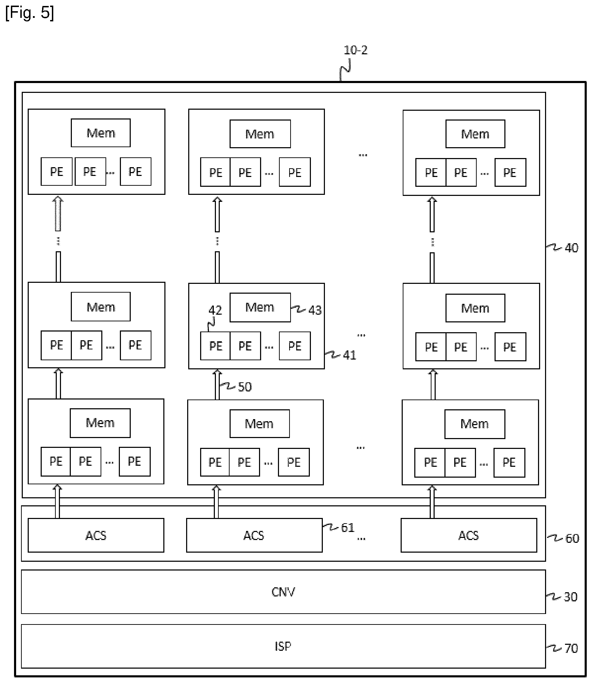

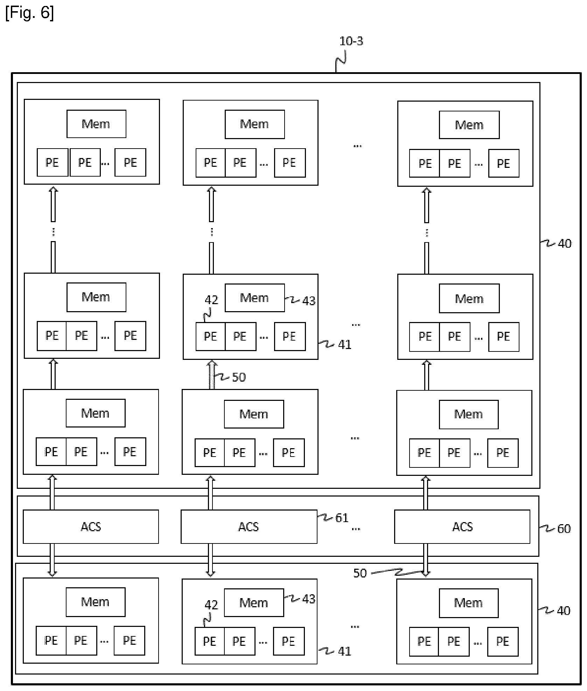

La figure 5 représente schématiquement la couche 10-2 de traitement située immédiatement en dessous de la couche 10-1 de capteur. La couche 10-2 correspond à la deuxième couche de l'empilement formant le circuit intégré tridimensionnel 10. La figure 6 représente schématiquement la couche 10-3 de traitement située en dessous de la deuxième couche 10-2. La couche 10-3 correspond à la troisième couche de l'empilement formant le circuit intégré tridimensionnel 10.

Tel qu'illustré sur la figure 1, le circuit intégré tridimensionnel 10 formant l'imageur intelligent selon l'invention comporte un bloc de conversion 30, un processeur de traitement parallèle 40, un bus de données 50 et un bloc de contrôle 60.

Le bloc de conversion 30 a pour fonction de transformer en données numériques les signaux analogiques fournis par les pixels 21 de la matrice 20 du capteur photosensible. Dans l'exemple considéré, et tel qu'illustré sur les figures 3 et 5, le bloc de conversion 30 est implémenté sur la couche 10-2 de traitement située immédiatement sous la couche 10-1 de capteur. Le bloc de conversion 30 est également désigné par le terme « CNV » dans les figures.

Il convient de noter que le bloc de conversion 30 pourrait aussi être implémenté sur une autre couche, par exemple sur une couche de traitement inférieure, voire même sur la couche 10-1 de capteur. Rien n'empêche non plus que le bloc de conversion 30 soit implémenté sur plusieurs couches (par exemple différentes parties du bloc de conversion pourraient être implémentées sur plusieurs couches de traitement, ou bien une partie du bloc de conversion pourrait être implémenté sur la couche de capteur et d'autres parties du bloc de conversion pourraient être implémentées sur une ou plusieurs couches de traitement).

Tel qu'illustré sur la figure 1, le bloc de conversion 30 comporte des convertisseurs analogique-numérique 31 (ADCs 31). Le bloc de conversion 30 peut également comporter d'autres composants électroniques, comme par exemple un circuit analogique d'amplification et de mise en forme des signaux, un décodeur de ligne ou de colonne de pixels, un circuit de lecture des pixels (« readout circuit »), etc. Ces composants ne sont pas représentés sur les figures. Les ADCs 31 du bloc de conversion sont agencés en pied des colonnes de la matrice 20 de pixels du capteur photosensible (agencement de type « column ADC »). Autrement dit, chaque colonne de pixels du capteur photosensible est associée à un ADC 31. Dans l'exemple considéré, le bloc de conversion 30 comporte donc 4096 ADCs.

Tel qu'illustré schématiquement sur la figure 2, chaque colonne de pixels de la matrice 20 du capteur photosensible de la couche 10-1 de capteur est connecté électriquement à un ADC 31 du bloc de conversion 30 par l'intermédiaire d'une connexion 11 électrique traversante (via).

De façon conventionnelle, chaque ADC 31 est adapté pour numériser les signaux analogiques des pixels de la colonne à laquelle l'ADC est rattaché (chaque signal analogique étant représentatif d'une intensité lumineuse reçue par un pixel).

Dans l'exemple considéré, le processeur de traitement parallèle 40 est configuré pour exécuter un traitement intensif d'analyse d'images basé sur un algorithme d'intelligence artificielle, par exemple pour de la reconnaissance de forme, d'objet, ou de visage, ou pour de la détection d'événement dans des images (par exemple détection de mouvement). L'algorithme d'intelligence artificielle est par exemple un algorithme de type réseau de neurones profond.

Pour pouvoir être implémenté sous le capteur photosensible, le processeur de traitement 40 doit respecter de fortes contraintes en termes de puissance consommée, d'échauffement thermique, de surface, et de capacité de calcul. Pour fournir une grande capacité de calcul, dans les contraintes de puissance, d'échauffement thermique et de surface, le processeur de traitement 40 suit une architecture parallèle organisée en une pluralité de groupes (« clusters » en anglais) de processeurs élémentaires. Ainsi, et tel qu'illustré sur la figure 1, le processeur de traitement parallèle 40 comporte une pluralité d'unité 41 de calcul. Chaque unité 41 de calcul comporte plusieurs processeurs élémentaires 42 et une mémoire 43 partagée entre les processeurs élémentaires 42 de l'unité 41 de calcul.

Pour permettre une analyse d'images en temps réel, les données numériques représentatives des pixels du capteur doivent être acheminées vers les mémoires 43 distribuées du processeur de traitement parallèle 40 avec un minimum de latence.

Il convient de noter que la mémoire 43 partagée peut être une mémoire monolithique partagée entre les différents processeurs élémentaires 42, ou bien une mémoire comportant plusieurs bancs de mémoire partagés entre les différents processeurs élémentaires 42 (les différents bancs de mémoire pouvant éventuellement être accédés simultanément pour augmenter la bande passante).

Dans l'exemple considéré et décrit en référence aux figures 2 à 6, le processeur de traitement parallèle 40 est implémenté en partie sur la couche 10-2 de traitement (c'est-à-dire sur la deuxième couche 10-2 de l'empilement, qui correspond également à la première couche de traitement) et en partie sur la couche 10-3 de traitement (c'est-à-dire sur la troisième couche 10-3 de l'empilement, qui correspond également à la deuxième couche de traitement). Tel qu'illustré sur les figures 1, 5 et 6, les unités 41 de calcul du processeur de traitement parallèle 40 sont agencées de façon matricielle selon plusieurs lignes et plusieurs colonnes. Tel qu'illustré sur les figures 5 et 6, une partie des lignes d'unités 41 de calcul est implémentée sur la couche 10-2 de traitement, et une autre partie des lignes d'unités 41 de calcul est implémentée sur la couche 10-3 de traitement.

Il convient de noter que cet exemple n'est nullement limitatif. Rien n'empêcherait par exemple que le processeur de traitement parallèle 40 soit implémenté entièrement sur la couche 10-2 de traitement située immédiatement sous la couche de capteur (deuxième couche de l'empilement). Rien n'empêcherait non plus qu'il soit implémenté sur une ou plusieurs couches de traitement situées en dessous de la deuxième couche 10-2 de l'empilement.

Dans l'exemple considéré, le processeur de traitement parallèle 40 est un processeur de type PNeuro tel que décrit dans le document « PNeuro : a scalable energy-efficient programmable hardware accelerator for neural networks », A. Carbon et al., Design, Automation And Test in Europe (DATA) 2018, pages 1045-1050. Une unité 41 de calcul correspond à un bloc de calcul neuronal (ou NCB, acronyme anglais de « Neural Computing Block »). La couche 10-2 de traitement comporte par exemple trois lignes de seize unités 41 de calcul. La couche 10-3 de traitement comporte par exemple trois autres lignes de seize unités 41 de calcul. Rien n'empêcherait toutefois que l'une et/ou l'autre des couches 10-2 et 10-3 de traitement comporte un autre nombre (plus grand ou plus petit que trois) de lignes d'unités 41 de calcul. Rien n'empêcherait non plus qu'une ligne d'unités 41 de calcul comporte un autre nombre (plus grand ou plus petit que seize) d'unités 41 de calcul. Dans l'exemple considéré, chacune des couches 10-2 et 10-3 de traitement occupe une surface de silicium d'environ 11 mm². L'épaisseur de la couche 10-2 est comprise entre 10 et 30 µm. L'épaisseur de la couche 10-3 est de l'ordre de 200 à 300 µm. L'épaisseur totale du circuit intégré tridimensionnel 10 est inférieure à 500 µm.

Le bus de données 50 et le bloc de contrôle 60 offrent la fonctionnalité d'un réseau de communication permettant d'acheminer les données numériques en sortie du bloc de conversion 30 vers les mémoires 43 partagées des différentes unités 41 de calcul. Il est important de noter que les données numériques sont acheminées « directement » du bloc de conversion 30 vers les différentes unités 41 de calcul. Cela signifie que, dans l'architecture d'imageur intelligent proposée, il n'y a pas de mémoire tampon intermédiaire pour mémoriser les données numériques de pixels entre un ADC 31 et le processeur de traitement 40. Autrement dit, les données numériques sont acheminées directement du bloc de conversion 30 vers les mémoires 43 partagées des unités 41 de calcul sans être mémorisées dans une autre mémoire intermédiaire. Dans l'exemple considéré avec un processeur de type PNeuro, chaque mémoire partagée 43 comporte quatre bancs de mémoire.

Tel qu'illustré sur les figures 5 et 6, le bus de données 50 et le bloc de contrôle 60 sont implémentés sur les couches de traitement 10-2 et 10-3 sur lesquelles le processeur de traitement parallèle 40 est implémenté.

Chaque unité 41 de calcul du processeur de traitement 40 est configurée pour traiter des données numériques correspondant à une zone (un sous-ensemble) de pixels 21 de la matrice 20 du capteur photosensible implémenté sur la couche 10-1 de capteur.

Les processeurs élémentaires 42 des unités 41 de calcul du processeur de traitement 40 sont destinés à être configurés pour lire des données numériques mémorisées dans la mémoire 43 partagée de l'unité 41 de calcul à laquelle ils appartiennent, et pour exécuter l'algorithme d'analyse d'images directement à partir des données lues. Cette interface directe vers les unités 41 de calcul, sans mémoire tampon intermédiaire, permet de traiter les données pixels au plus tôt après la conversion numérique.

Le bloc de contrôle 60 est configuré de telle sorte que des données numériques représentatives d'une même ligne de pixels sont toutes acheminées simultanément vers différentes unités 41 de calcul. Ainsi, les unités 41 de calcul ayant reçu des données numériques relatives à une ou plusieurs lignes de pixels de la matrice peuvent commencer leur traitement pendant que des données numériques relatives à une ou plusieurs autres lignes de pixels sont acheminées vers d'autres unités de calcul. Ceci permet de limiter fortement la latence dans le traitement d'analyse d'images.

Tel qu'illustré sur les figures 1, 5 et 6, le bloc de contrôle 60 comporte plusieurs sous-blocs de contrôle 61. Les sous-bloc de contrôle 61 peuvent notamment encapsuler les données à transmettre dans des messages comportant au moins une adresse de destination (adresse identifiant une unité 41 de calcul parmi les différentes unités 41 de calcul du processeur de traitement parallèle 40). Les sous-bloc de contrôle 61 peuvent également transmettre des informations de contrôle et/ou de synchronisation (par exemple un signal permettant de signaler le début ou la fin de traitement d'une image). Sur les figures, les sous-bloc de contrôle 61 sont désignés par l'acronyme ACS (acronyme anglais de « Address, Control and Synchronization »). De façon avantageuse, et tel qu'illustré sur les figures 1, 5 et 6, chaque sous-bloc de contrôle 61 peut être connecté, par l'intermédiaire d'une branche du bus de données 50, à toutes les unités 41 de calcul d'une même colonne d'unités 41 de calcul.

Tel qu'illustré sur la figure 2, deux sous-blocs de contrôle 61 situés sur deux couches 10-2, 10-3 de traitement différentes peuvent être connectés par des connexions 11 traversantes. Ceci permet de fournir les données pixels à toutes les unités 41 de calcul du processeur de traitement 40 réparties sur les différentes couches de traitement.

Il convient de noter qu'une donnée numérique en sortie du bloc de conversion 30 peut être représentative d'un seul pixel 21 ou d'un groupe (une zone) de pixels 21 de la matrice 20 du capteur photosensible.

Dans l'exemple considéré, et tel qu'illustré sur la figure 1, le bloc de conversion 30 comporte cinq-cents douze blocs de regroupement 32 de pixels. Un bloc de regroupement 32 est désigné par la lettre « B » (pour « binning » en anglais) sur la figure 1. Chaque bloc de regroupement 32 de pixels est connecté à huit ADCs 31 associés à huit colonnes successives de la matrice 20 de pixels. Chaque bloc de regroupement 32 est configuré pour fournir une donnée numérique représentative d'un groupe de 8 x 8 pixels 21 de la matrice 20 de pixels. Dans un tel cas, une donnée numérique en sortie d'un bloc de regroupement 32 est représentative d'une zone de soixante-quatre (8 x 8 = 64) pixels du capteur photosensible. Cette donnée numérique est par exemple une moyenne pondérée des soixante-quatre pixels traités par le bloc de regroupement 32. Ceci a pour effet de réduire globalement la résolution d'image par 8 x 8 (la résolution est réduite de 4096 x 3072 à 512 x 384) tout en gardant l'information visuelle dans l'image. Comme la résolution est réduite le traitement d'analyse intensif requiert moins de mémoire et moins de calculs, donc le temps de traitement et la consommation électrique sont réduits. Le bloc de regroupement 32 exécute un traitement très simple en ligne et à la volée qui n'introduit pas de latence. Tous les huit cycles d'horloge d'ADC, une nouvelle donnée numérique représentative d'un groupe de 8 x 8 pixels est produite.

Chaque sous-bloc de contrôle 61 reçoit simultanément trente-deux données numériques fournies par trente-deux blocs de regroupement 32 consécutifs (chaque donnée numérique étant représentative d'une zone de 8 x 8 pixels). Chaque sous-bloc de contrôle 61 sérialise ces trente-deux données numériques sur le bus de données 50 sans perte de bande passante (la fréquence d'opération d'un sous-bloc de contrôle 61 est donc au moins trente-deux fois supérieure celle d'un ADC). Ces trente-deux données numériques sont acheminées vers au moins une unité 41 de traitement.

Dans l'exemple considéré, dans lequel le processeur de traitement 40 est organisé en six lignes de seize unités 41 de calcul, les seize unités 41 de calcul d'une même ligne reçoivent chacune simultanément trente-deux données numériques qui représentent au total huit lignes de pixels (soit 4096 x 8 pixels). Au bout de soixante-quatre cycles d'horloge d'ADC, une ligne d'unités 41 de calcul a reçu les données numériques représentatives d'un sixième des pixels d'une image (c'est-à-dire 512 lignes de pixels, soit 4096 x 512 pixels). Quand elles ont reçu leurs données numériques, les unités 41 de calcul d'une même ligne peuvent alors commencer leur traitement pendant que d'autres données numériques relatives à d'autres lignes de pixels sont acheminées vers d'autres unités de calcul d'une autre ligne.

Il convient toutefois de noter que l'utilisation des blocs de regroupement 32 est optionnelle. Sans les blocs de regroupement 32, une donnée numérique en sortie du bloc de conversion 30 est représentative d'un seul pixel 21 de la matrice 20.

Dans des modes particuliers de réalisation, le bloc de contrôle 60 peut être configuré pour acheminer une même donnée numérique vers au moins deux unités 41 de calcul distinctes en transmettant ladite donnée numérique une seule fois sur le bus de données 50. Il est ainsi possible de réaliser une fonction de redondance (par exemple lorsque les mêmes données numériques de pixels sont transmises à au moins deux unités 41 de calcul distinctes) ou une fonction de traitement par imagette avec des zones de recouvrement (par exemple lorsqu'une partie seulement des données numériques de pixels destinées à une unité 41 de calcul est également transmise à une autre unité 41 de calcul). Le fait de pouvoir transmettre une même donnée numérique à plusieurs unités 41 de calcul distinctes en une seule transmission sur le bus de données 50 évite d'introduire de la latence dans le traitement.

Tel qu'illustré à la figure 1, le circuit intégré tridimensionnel 10 formant l'imageur peut également comporter, de façon optionnelle, un processeur d'optimisation 70 distinct du processeur de traitement parallèle 40. Le processeur d'optimisation 70 est désigné par « ISP » sur les figures (pour l'acronyme anglais « Image Signal Processor », en français « processeur d'images »).

Le processeur d'optimisation 70 est par exemple adapté pour exécuter un algorithme d'optimisation ou de correction d'erreurs, et pour faire sortir un flux d'images sur une interface de sortie (par exemple une interface MIPI).

Dans l'exemple considéré, et tel qu'illustré sur les figures 3 et 5, le processeur d'optimisation 70 est implémenté sur la couche 10-2 de traitement. Rien n'empêcherait toutefois que le processeur d'optimisation 70 soit implémenté sur une autre couche de traitement, ou qu'il soit implémenté sur plusieurs couches de traitement différentes.

De façon avantageuse, les données numériques en sortie du bloc de conversion 30 sont acheminées au processeur d'optimisation 70 par un chemin distinct du bus de données 50, par exemple par un autre bus de données distinct du bus de données 50 qui alimente les mémoires 43 partagées des unités 41 de calcul du processeur de traitement parallèle 40.

L'utilisation de deux chemins distincts pour acheminer les données numériques vers le processeur de traitement parallèle 40 et vers le processeur d'optimisation 70 permet un traitement simultané d'amélioration d'image et d'analyse intensive d'image. Grâce à ce découplage, le traitement d'optimisation d'image et/ou de correction de défauts optiques mis en œuvre par le processeur d'optimisation 70 n'ajoute pas de latence supplémentaire au traitement intensif d'analyse d'image mis en œuvre par le processeur de traitement parallèle 40.

Il convient de noter que le mode de réalisation décrit ci-avant en référence aux figures 2 à 6 est un exemple nullement limitatif. En particulier, le nombre de couches de traitement dans l'empilement formant le circuit intégré tridimensionnel 10 pourrait être différent (par exemple une seule couche de traitement, ou plus que deux couches de traitement). Il en va de même du nombre d'unités 41 de calcul du processeur de traitement parallèle 40.

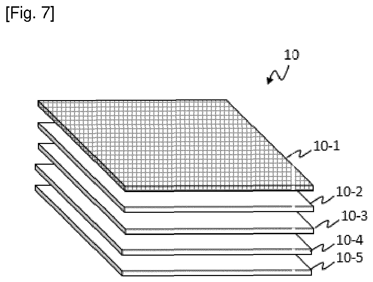

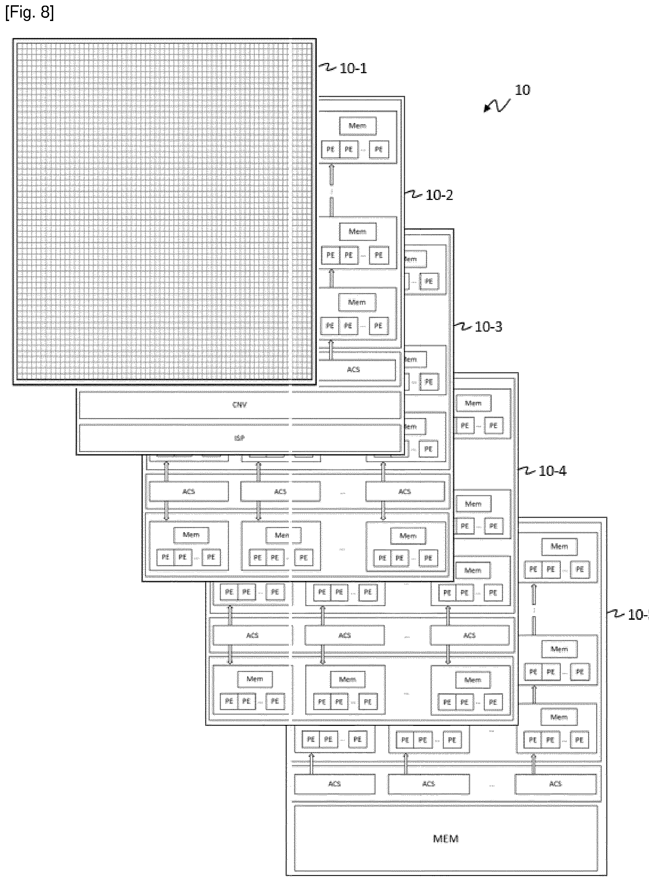

Les figures 7 à 9 présentent un autre exemple de réalisation d'un imageur intelligent selon l'invention. Dans cet exemple, le circuit intégré tridimensionnel 10 comporte cinq couches : une couche 10-1 de capteur et quatre couches 10-2 à 10-5 de traitement. La couche 10-1 de capteur est similaire à celle décrite ci-avant en référence aux figures 2 à 4. La couche 10-2 de traitement est similaire à la couche 10-2 de traitement décrite ci-avant en référence aux figures 2, 3 et 5. Les couches de traitement 10-3 et 10-4 sont similaire à la couches 10-3 de traitement décrite ci-avant en référence aux figures 2, 3 et 6.

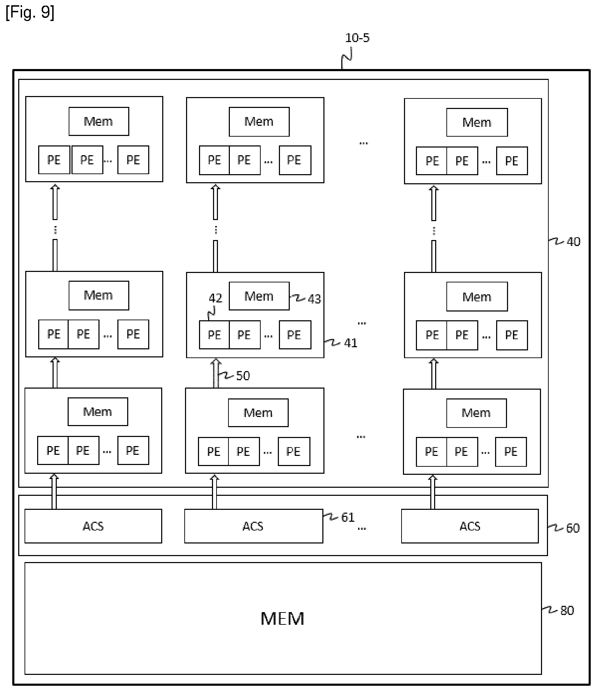

La couche 10-5 de traitement est décrite à la figure 9. La couche 10-5 de traitement comporte une partie du processeur de traitement parallèle 40 ainsi qu'une partie du bloc de contrôle 60 et du bus de données 50. En outre, la couche 10-5 de traitement comporte une mémoire de masse 80 pouvant servir par exemple à stocker des poids et des paramètres d'un ou plusieurs algorithmes d'intelligence artificielle destinés à être exécutés par le processeur de traitement parallèle 40. Cette mémoire de masse 80 peut être réalisée à partir de la technologie SRAM (acronyme anglais de « Static Random Access Memory ») ou avec une technologie non volatile pour obtenir plus de densité mémoire. La couche 10-5 de traitement est connectée à la couche 10-4 de traitement située au-dessus d'elle par des connexions 11 traversantes au niveau des sous-blocs de contrôle 61, de façon similaire à ce qui a été décrit précédemment en référence à la figure 2. La couche 10-5 de traitement occupe elle aussi une surface de silicium d'environ 11 mm².

Le circuit intégré tridimensionnel 10 pourrait également comporter, de façon optionnelle, un préprocesseur de détection approximative d'événements utilisé pour réveiller le processeur de traitement parallèle 40 lorsqu'une détection approximative d'événement est détecté. De telles dispositions permettent de pouvoir placer le processeur de traitement parallèle 40 en mode veille tant qu'une détection approximative d'événement n'est pas détectée par le préprocesseur. Le préprocesseur peut par exemple être implémenté sur la couche 10-2 de traitement, et/ou sur une ou plusieurs autres couches de traitement. Une étape supplémentaire de regroupement de pixels peut éventuellement être envisagée pour réduire encore davantage la résolution des données fournies au préprocesseur (par exemple une résolution à 108 x 76 pixels).

Dans l'exemple illustré sur les figures 7 à 9, l'épaisseur de chacune des couches 10-2 à 10-4 est comprise entre 10 et 30 µm. L'épaisseur de la couche 10-5 est de l'ordre de 200 à 300 µm.

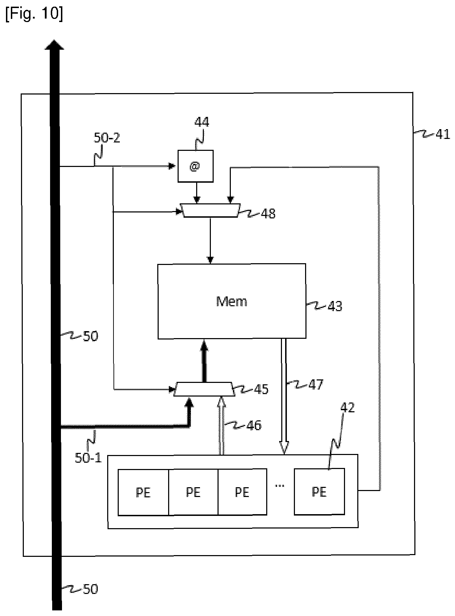

La figure 10 représente schématiquement un exemple de réalisation d'une unité 41 de calcul du processeur de traitement parallèle 40. La figure 10 illustre également comment une donnée numérique en sortie du bloc de conversion 30 peut être acheminée vers la mémoire partagée de l'unité 41 de calcul avec le bus de données 50 sous le contrôle d'un sous-bloc de contrôle 61 (bloc ACS).

Dans l'exemple considéré et illustré à la figure 10, un multiplexeur 45 permet de sélectionner un type de donnée à écrire dans la mémoire partagée 43. Le multiplexeur 48 permet de sélectionner l'adresse à utiliser pour l'écriture d'une donnée numérique, selon que la donnée à écrire corresponde à une information de pixels provenant du bus de données 50 ou bien à une information provenant du groupe de processeurs élémentaires 42. La flèche 50-1 représente une donnée numérique représentative d'un ou plusieurs pixels transmise sur le bus de données 50 ; la flèche 50-2 représente une information de contrôle ou de synchronisation émise par un bloc ACS sur le bus de données 50 ; la flèche 46 représente une donnée provenant du groupe de processeurs élémentaires 42 à écrire dans la mémoire 43 partagée ; la flèche 47 représente une donnée lue par le groupe de processeurs élémentaires 42. L'unité 41 de calcul comporte un bloc de filtrage 44 qui a pour fonction de détecter si une donnée numérique de pixels transmise sur le bus de données 50 doit ou non être traitée par l'unité 41 de calcul et, le cas échéant, de déterminer une adresse locale de la mémoire 43 partagée à laquelle la donnée doit être écrite.

Différentes options sont envisageables pour acheminer les données numériques en sortie du bloc de conversion 30 vers les différentes unités 41 de calcul.

Selon un premier exemple, l'acheminement des données est opéré « point à point », ou « point à multipoints ». Dans ce cas, le bloc de contrôle 60 est configuré pour encapsuler une donnée numérique de pixels dans un message comportant au moins un identifiant d'adressage correspondant à au moins une unité 41 de calcul et pour diffuser ledit message sur le bus de données 50 vers plusieurs unités 41 de calcul. Le bloc de filtrage 44 est configuré pour détecter, en fonction dudit au moins un identifiant d'adressage, si la donnée numérique incluse dans le message doit ou non être traitée par l'unité 41 de calcul.

Selon un deuxième exemple, l'acheminement des données est mis en œuvre par diffusion (« broadcast » en anglais). Dans ce cas, le bloc de filtrage 44 est configuré pour détecter, en fonction d'un nombre de données numériques reçues, si une donnée numérique reçue doit ou non être traitée par l'unité 41 de calcul. Par exemple, le bloc de contrôle 60 est configuré pour émettre un signal de synchronisation sur le bus de donnée 50 pour indiquer le début du traitement d'une nouvelle image ; le bloc de filtrage 44 sait qu'il va voir passer un flux de données numériques associé à cette nouvelle image sur le bus de données ; et le bloc de filtrage 44 connait également les rangs des données numériques que l'unité 41 de calcul à laquelle il est rattaché doit traiter dans ce flux.

La description ci-avant illustre clairement que, par ses différentes caractéristiques et leurs avantages, la présente invention atteint les objectifs fixés. En particulier, l'agencement des ADCs en pied de colonne permet de les mutualiser efficacement sur les colonnes de pixels. La surface occupée par les ADCs est ainsi optimisée et le circuit de lecture est simplifié. L'agencement des ADCs en pied de colonne permet d'obtenir une densité de photodétecteurs plus importante dans la matrice de pixels, ce qui permet d'améliorer les performances du capteur (par exemple en termes de signal sur bruit ou d'efficacité quantique).

La structure en empilement de couches permet elle aussi d'optimiser les performances (réduction de consommation électrique, forte parallélisation des tâches opérées par les circuits des différentes couches).

L'acheminement direct des données numériques depuis le bloc de conversion 30 vers les mémoires 43 partagées des unités 41 de calcul (sans utiliser une mémoire tampon intermédiaire) permet de limiter significativement la latence dans le traitement des images, l'encombrement de l'imageur, et la puissance consommée par l'imageur.

L'utilisation d'un processeur de traitement parallèle 40 permet de répondre aux contraintes inhérentes au traitement intensif d'images (contraintes en termes de puissance consommée, d'échauffement thermique, de surface, et de capacité de calcul). Avantageusement, les données numériques représentatives d'une même ligne de pixels sont toutes acheminées simultanément vers différentes unités 41 de calcul du processeur de traitement parallèle 40 afin de réduire la latence dans le traitement.

## Revendications

1. Imageur intelligent comprenant un circuit intégré tridimensionnel (10) comportant un empilement d'au moins deux couches (10-1, 10-2, 10-3) de circuit intégré, chaque couche étant électriquement connectée à au moins une autre couche par l'intermédiaire de connexions (11) électriques traversantes, lesdites couches comprenant :
- une couche (10-1) supérieure, dite « couche de capteur », comprenant un capteur photosensible comportant une matrice (20) de pixels, chaque pixel (21) étant configuré pour fournir un signal analogique représentatif d'une intensité lumineuse reçue,
- une ou plusieurs couches (10-2, 10-3) inférieures, dites « couches de traitement »,
le circuit intégré tridimensionnel (10) comportant :
- un bloc de conversion (30) implémenté sur la couche (10-1) de capteur et/ou sur une ou plusieurs couches (10-2, 10-3) de traitement, le bloc de conversion (30) comprenant une pluralité de convertisseurs analogique-numérique (31) chacun associé respectivement à une colonne de la matrice (20) de pixels, le bloc de conversion (30) étant configuré pour transformer en données numériques les signaux analogiques fournis par les pixels (21),
- un processeur de traitement parallèle (40) implémenté sur une ou plusieurs couches (10-2, 10-3) de traitement, le processeur de traitement parallèle (40) comportant une pluralité d'unités (41) de calcul, chaque unité (41) de calcul comportant plusieurs processeurs élémentaires (42) et une mémoire (43) partagée entre les processeurs élémentaires (42) de l'unité (41) de calcul,
- un bus de données (50) et un bloc de contrôle (60) implémentés sur la ou les couches de traitement (10-2, 10-3) sur lesquelles le processeur de traitement parallèle (40) est implémenté, et configurés pour acheminer les données numériques en sortie du bloc de conversion (30) directement vers les mémoires (43) partagées des unités (41) de calcul, les données numériques représentatives d'une même ligne de pixels étant toutes acheminées simultanément vers différentes unités (41) de calcul,
**caractérisé en ce que** le bloc de contrôle (60) est configuré pour acheminer une même donnée numérique vers au moins deux unités (41) de calcul distinctes en transmettant ladite donnée numérique une seule fois sur le bus de données (50).

2. Imageur intelligent selon la revendication 1 dans lequel le bloc de conversion (30) est entièrement implémenté sur une ou plusieurs couches de traitement (10-2, 10-3).

3. Imageur intelligent selon la revendication 2 dans lequel le bloc de conversion (30) est entièrement implémenté sur une seule couche (10-2) de traitement (10-2).

4. Imageur intelligent selon la revendication 3 dans lequel le bloc de conversion (30) est entièrement implémenté sur la couche (10-2) de traitement située immédiatement sous la couche (10-1) de capteur.

5. Imageur intelligent selon l'une quelconque des revendications 3 à 4 dans lequel le circuit intégré tridimensionnel (10) comporte au moins trois couches (10-1, 10-2, 10-3), et le processeur de traitement parallèle (40) est implémenté en partie sur la couche (10-2) de traitement qui implémente le bloc de conversion (30) et en partie sur au moins une autre couche (10-3) de traitement.

6. Imageur intelligent selon l'une quelconque des revendications 1 à 5 dans lequel le bloc de conversion (30) comporte des blocs de regroupement (32) de pixels, chaque bloc de regroupement (32) de pixels étant connecté à plusieurs convertisseurs analogique-numérique (31) associés à plusieurs colonnes successives de la matrice de pixels, chaque bloc de regroupement (32) de pixels étant configuré pour fournir une donnée numérique représentative d'un groupe de pixels (21) de la matrice (20) de pixels.

7. Imageur intelligent selon l'une quelconque des revendications 1 à 6 dans lequel les unités (41) de calcul sont agencées de façon matricielle selon plusieurs lignes et plusieurs colonnes, et le bloc de contrôle (60) comporte plusieurs sous-blocs de contrôle (61), chaque sous-bloc de contrôle (61) étant connecté à toutes les unités (41) de calcul d'une même colonne par l'intermédiaire d'une branche du bus de données (50).

8. Imageur intelligent selon l'une quelconque des revendications 1 à 7 dans lequel le circuit intégré tridimensionnel (10) comporte en outre un processeur d'optimisation (70) distinct du processeur de traitement parallèle (40), implémenté sur une ou plusieurs couches (10-2, 10-3) de traitement, et dans lequel des données numériques en sortie du bloc de conversion (30) sont acheminées au processeur d'optimisation (70) par un chemin distinct du bus de données (50).

9. Imageur intelligent selon l'une quelconque des revendications 1 à 8 dans lequel le bloc de contrôle (60) est configuré pour encapsuler une donnée numérique dans un message comportant au moins un identifiant d'adressage correspondant à au moins une unité (41) de calcul, et pour diffuser ledit message sur le bus de données (50) vers plusieurs unités (41) de calcul, et dans lequel chaque unité (41) de calcul comporte un bloc de filtrage (44) configuré pour détecter, en fonction dudit au moins un identifiant d'adressage, si la donnée numérique encapsulée dans le message doit ou non être traitée par l'unité (41) de calcul.

10. Imageur intelligent selon l'une quelconque des revendications 1 à 8 dans lequel chaque unité (41) de calcul comporte un bloc de filtrage (44) configuré pour détecter, en fonction d'un nombre de données numériques reçues, si une donnée numérique reçue doit ou non être traitée par l'unité (41) de calcul.

## Patentansprüche

1. Intelligenter Bildgeber, der eine dreidimensionale integrierte Schaltung (10) umfasst, die einen Stapel von mindestens zwei Schichten der integrierten Schaltung (10-1, 10-2, 10-3) beinhaltet, wobei jede Schicht anhand durchkontaktierter elektrischer Verbindungen (11) elektrisch mit mindestens einer anderen Schicht verbunden ist, wobei die Schichten umfassen:
- eine "Sensorschicht" genannte obere Schicht (10-1), die einen lichtempfindlichen Sensor umfasst, der eine Pixelmatrix (20) beinhaltet, wobei jedes Pixel (21) konfiguriert ist, um ein analoges Signal bereitzustellen, das repräsentativ für eine empfangene Lichtintensität ist,
- eine oder mehrere "Verarbeitungsschichten" genannte untere Schichten (10-2, 10-3),
wobei die dreidimensionale integrierte Schaltung (10) beinhaltet:
- einen Umwandlungsblock (30), der auf der Sensorschicht (10-1) und/oder auf einer oder mehreren Verarbeitungsschichten (10-2, 10-3) implementiert ist, wobei der Umwandlungsblock (30) eine Vielzahl von Analog-Digital-Wandlern (31) umfasst, die jeweils mit einer Spalte der Pixelmatrix (20) verknüpft sind, wobei der Umwandlungsblock (30) konfiguriert ist, um die von den Pixeln (21) bereitgestellten analogen Signale in digitale Daten umzuwandeln,
- einen parallelen Verarbeitungsprozessor (40), der auf einer oder mehreren Verarbeitungsschichten (10-2, 10-3) implementiert ist, wobei der parallele Verarbeitungsprozessor (40) eine Vielzahl von Recheneinheiten (41) beinhaltet, wobei jede Recheneinheit (41) mehrere elementare Prozessoren (42) und einen Speicher (43) beinhaltet, der zwischen den elementaren Prozessoren (42) der Recheneinheit (41) geteilt wird,
- einen Datenbus (50) und einen Steuerblock (60), die auf der oder den Verarbeitungsschichten (10-2, 10-3) implementiert sind, auf denen der parallele Verarbeitungsprozessor (40) implementiert ist, und konfiguriert sind, um die digitalen Daten am Ausgang des Umwandlungsblocks (30) direkt zu den geteilten Speichern (43) der Recheneinheiten (41) weiterzuleiten, wobei die digitalen Daten am, die für eine gleiche Pixelzeile repräsentativ sind, alle gleichzeitig zu verschiedenen Recheneinheiten (41) weitergeleitet werden,
**dadurch gekennzeichnet, dass** der Steuerblock (60) konfiguriert ist, um ein gleiches digitales Datenelement zu mindestens zwei getrennten Recheneinheiten (41) durch Übertragen des digitalen Datenelements einmal am Datenbus (50) weiterzuleiten.

2. Intelligenter Bildgeber nach Anspruch 1, wobei der Umwandlungsblock (30) vollständig auf einer oder mehreren Verarbeitungsschichten (10-2, 10-3) implementiert ist.

3. Intelligenter Bildgeber nach Anspruch 2, wobei der Umwandlungsblock (30) vollständig auf einer einzigen Schicht (10-2) zur Verarbeitung (10-2) implementiert ist.

4. Intelligenter Bildgeber nach Anspruch 3, wobei der Umwandlungsblock (30) vollständig auf der Verarbeitungsschicht (10-2) implementiert ist, die sich unmittelbar unter der Sensorschicht (10-1) befindet.

5. Intelligenter Bildgeber nach einem der Ansprüche 3 bis 4, wobei die dreidimensionale integrierte Schaltung (10) mindestens drei Schichten (10-1, 10-2, 10-3) beinhaltet und der parallele Verarbeitungsprozessor (40) teilweise auf der Verarbeitungsschicht (10-2), die den Umwandlungsblock (30) implementiert, und teilweise auf mindestens einer anderen Verarbeitungsschicht (10-3) implementiert ist.

6. Intelligenter Bildgeber nach einem der Ansprüche 1 bis 5, wobei der Umwandlungsblock (30) Pixel-Bündelungsblöcke (32) beinhaltet, wobei jeder Pixel-Bündelungsblock (32) mit mehreren Analog-Digital-Wandlern (31) verbunden ist, die mit mehreren aufeinanderfolgenden Spalten der Pixelmatrix verknüpft sind, wobei jeder Pixel-Bündelungsblock (32) konfiguriert ist, um ein digitales Datenelement bereitzustellen, das repräsentativ für eine Pixelgruppe (21) der Pixelmatrix (20) ist.

7. Intelligenter Bildgeber nach einem der Ansprüche 1 bis 6, wobei die Recheneinheiten (41) matrixartig über mehrere Zeilen und mehrere Spalten angeordnet sind, und der Steuerblock (60) mehrere Teilsteuerblöcke (61) beinhaltet, wobei jeder Teilsteuerblock (61) über einen Datenbuszweig (50) mit allen Recheneinheiten (41) einer gleichen Spalte verbunden ist.

8. Intelligenter Bildgeber nach einem der Ansprüche 1 bis 7, wobei die dreidimensionale integrierte Schaltung (10) weiter einen Optimierungsprozessor (70) beinhaltet, der vom parallelen Verarbeitungsprozessor (40) getrennt ist, der auf einer oder mehreren Verarbeitungsschichten (10-2, 10-3) implementiert ist, und wobei digitale Daten am Ausgang des Umwandlungsblocks (30) über einen vom Datenbus (50) getrennten Pfad zum Optimierungsprozessor (70) weitergeleitet werden.

9. Intelligenter Bildgeber nach einem der Ansprüche 1 bis 8, wobei der Steuerblock (60) konfiguriert ist, um ein digitales Datenelement in eine Nachricht einzukapseln, die mindestens eine Adressierungskennung beinhaltet, die mindestens einer Recheneinheit (41) entspricht, und um die Nachricht auf dem Datenbus (50) an mehrere Recheneinheiten (41) zu übertragen, und wobei jede Recheneinheit (41) einen Filterblock (44) beinhaltet, der konfiguriert ist, um in Abhängigkeit von der mindestens einen Adressierungskennung zu erkennen, ob das in der Nachricht eingekapselte digitale Datenelement von der Recheneinheit (41) zu verarbeiten ist oder nicht.

10. Intelligenter Bildgeber nach einem der Ansprüche 1 bis 8, wobei jede Recheneinheit (41) einen Filterblock (44) beinhaltet, der konfiguriert ist, um in Abhängigkeit von einer Anzahl empfangener digitaler Daten zu erkennen, ob ein empfangenes digitales Datenelement von der Recheneinheit (41) zu verarbeiten ist oder nicht.

## Claims

1. A smart imager comprising a three-dimensional integrated circuit (10) including a stack of at least two integrated circuit layers (10-1, 10-2, 10-3), each layer being electrically connected to at least one other layer by means of through electrical connections (11), said layers comprising:
- an upper layer (10-1), so-called "sensor layer", comprising a photosensitive sensor including an array (20) of pixels, each pixel (21) being configured to supply an analog signal representative of a received luminous intensity,
- one or more lower layer(s) (10-2, 10-3), so-called "processing layers",
the three-dimensional integrated circuit (10) comprising:
- a conversion block (30) implemented on the sensor layer (10-1) and/or on one or more processing layer(s) (10-2, 10-3), the conversion block (30) comprising a plurality of analog-to-digital converters (31) each associated respectively with a column of the array (20) of pixels, the conversion block (30) being configured to transform the analog signals supplied by the pixels (21) into digital data,
- a parallel processing processor (40) implemented on one or more processing layer(s) (10-2, 10-3), the parallel processing processor (40) including a plurality of computing units (41), each computing unit (41) including several elementary processors (42) and a memory (43) shared between the elementary processors (42) of the computing unit (41),
- a data bus (50) and a control bus (60) implemented on the processing layer(s) (10-2, 10-3) on which the parallel processing processor (40) is implemented, and configured to convey the digital data at the output of the conversion block (30) directly towards the shared memories (43) of the computing units (41), all of the digital data representative of the same row of pixels being conveyed simultaneously towards different computing units (41),
**characterized in that** the control block (60) is configured to convey the same digital data towards at least two distinct computing units (41) while transmitting said digital data only once on the data bus (50).

2. The smart imager according to claim 1, wherein the conversion block (30) is completely implemented on one or more processing layer(s) (10-2, 10-3).

3. The smart imager according to claim 2, wherein the conversion block (30) is completely implemented on one single processing layer (10-2).

4. The smart imager according to claim 3, wherein the conversion block (30) is completely implemented on the processing layer (10-2) located immediately beneath the sensor layer (10-1).

5. The smart imager according to any one of claims 3 to 4, wherein the three-dimensional integrated circuit (10) includes at least three layers (10-1, 10-2, 10-3), and the parallel processing processor (40) is implemented in part on the processing layer (10-2) which implements the conversion block (30) and in part on at least one other processing layer (10-3).

6. The smart imager according to any one of claims 1 to 5, wherein the conversion block (30) includes pixel grouping blocks (32), each pixel grouping block (32) being connected to several analog-to-digital converters (31) associated with several successive columns of the array of pixels, each pixel grouping block (32) being configured to supply digital data representative of a group of pixels (21) of the array (20) of pixels.

7. The smart imager according to any one of claims 1 to 6, wherein the computing units (41) are arranged in an array-like fashion according to several rows and several columns, and the control block (60) includes several control sub-blocks (61), each control sub-block (61) being connected to all of the computing units (41) of the same column via a branch of the data bus (50).

8. The smart imager according to any one of claims 1 to 7, wherein the three-dimensional integrated circuit (10) further includes an optimisation processor (70) distinct from the parallel processing processor (40), implemented on one or more processing layer(s) (10-2, 10-3), and wherein digital data at the output of the conversion block (30) are conveyed to the optimisation processor (70) via a route distinct from the data bus (50).

9. The smart imager according to any one of claims 1 to 8, wherein the control block (60) is configured to encapsulate digital data into a message including at least one addressing identifier corresponding to at least one computing unit (41), and to broadcast said message over the data bus (50) towards several computing units (41), and wherein each computing unit (41) includes a filtering block (44) configured to detect, according to said at least one addressing identifier, whether the encapsulated digital data in the message should be processed by the computing unit (41) or not.

10. The smart imager according to any one of claims 1 to 8, wherein each computing unit (41) includes a filtering block (44) configured to detect, according to a number of received digital data, whether received digital data should be processed by the computing unit (41) or not.
